# EUROPEAN PATENT SPECIFICATION

(11) **EP 4 370 226 B1**
(45) Date of publication and mention of the grant of the patent: **28.10.2026**
(21) Application number: 22744726.5
(22) Date of filing: 07.07.2022
(51) Int. Cl.: B01D 11/04, C01B 15/023

(54) **VALVE TRAYS IN EXTRACTION COLUMNS**
VENTILBÖDEN IN EXTRAKTIONSSÄULEN
PLATEAUX À CLAPETS DANS DES COLONNES D'EXTRACTION

(30) Priority: 14.07.2021 EP 21185585
(43) Date of publication of application: 22.05.2024
(73) Proprietor: Evonik Operations GmbH, 45128 Essen (DE)
(72) Inventor: RYLL, Marco, 64409 Messel (DE); KAMP, Johannes, 60598 Frankfurt (DE); ARÉVALO SAADE, Eduardo Federico, 63526 Erlensee (DE)
(74) Representative: Evonik Patent Association
(86) International application number: PCT/EP2022/068833
(87) International publication number: WO 2023/285257

(56) References cited:
- CN-A- 103 803 503
- CN-A- 107 998 909
- CN-A- 109 381 886
- US-B1- 6 270 062
- DIETER MEWES ET AL: "Predetermination of fluiddynamic properties of sieve-plate extraction columns without pulsation.", CHEM.-ING.-TECH., vol. 50, no. 1, 1 January 1978 (1978-01-01), pages 203 - 211, XP002805100, DOI: 10.1002/CITE.330500308
- "Ullmann's Encyclopedia of Industrial Chemistry", 15 April 2007, WILEY-VCH VERLAG, Weinheim, ISBN: 978-3-52-730673-2, article GUSTAAF GOOR ET AL: "Hydrogen Peroxide", XP055038254, DOI: 10.1002/14356007.a13_443.pub2
- ENGEL VOLKER: "WelChem GmbH @BULLET 2020 @BULLET All rights reserved WelChem GmbH @BULLET 2020 @BULLET All rights reserved", 31 July 2020 (2020-07-31), pages 1 - 7, XP055972652, Retrieved from the Internet <URL:https://welchem.com/fileadmin/pub/WelChem_FloatValveTray_2020-3.pdf> [retrieved on 20221018]

## Description

### TECHNICAL FIELD

The present invention relates to an extraction method and a countercurrent liquid-liquid extraction column for the extraction of a hydrogen peroxide containing oxidized working solution of an anthraquinone process. The extraction column comprises a plurality of sieve trays, wherein at least one of said sieve trays is a valve sieve tray comprising a downcomer and at least one floating valve comprising a liftable opening member covering a valve hole in the valve sieve tray and can be lifted by the light phase below the sieve tray. A more stable operation of sieve tray extraction columns is possible by using a floating valve so that the flow rate of the oxidized working solution of an AO process and the daily production of hydrogen peroxide can be increased.

### TECHNICAL BACKGROUND

The most used process for producing hydrogen peroxide on an industrial scale is the anthraquinone process (AO process), which generates hydrogen peroxide by hydrogenating a working solution of an alkylanthraquinone or an alkyltetrahydroanthraquinone in a solvent mixture with a low miscibility with water and oxidizing the hydrogenated solution with molecular oxygen (O₂), usually with air. The hydrogen peroxide is then extracted with water from the oxidized working solution in an extraction column and the working solution is reused for generating hydrogen peroxide. Furthermore, the aqueous hydrogen peroxide solution can be concentrated in a distillation unit. An overview of the anthraquinone process is given in Ullmann's Encyclopedia of Industrial Chemistry, online edition, Vol. A18, pages 397-409, DOI
0.1002/14356007.a13_443.pub2, and in particular in Fig. 5 on page 401.

The operation range of sieve tray extraction columns is limited by several hydrodynamic boundary conditions. An increase of surface load or even a change of physical properties of the liquid/liquid system compared to the design case might cause flooding of the column. Especially, downcomer flooding of single compartments in the extraction column prevents the operation of the entire column at this operating point.

High diameters of sieve holes result in formation of large droplets of the dispersed phase in the column and thus, reduced performance as well as in instable flow conditions such as fluctuations. Typical hole diameters are 2.5 to 3.0 mm. Increasing the diameter of the hole result in a higher throughput but decreases the separation performance.

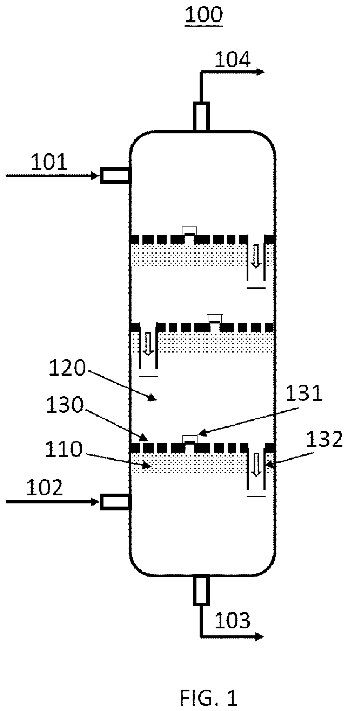

Mewes et al. disclose several common sieve tray extraction columns (Chem.-Ing.-Tech. 50 (1978) Nr. 3, S. 203 - 211). In FIG. 1 a sieve tray extraction column is shown, comprising several sieve trays and each sieve tray comprises a downcomer. According to table 1, such extraction columns can be used in an AO process. However, Mewes et al. do not mention of a valve sieve tray that comprises a downcomer and a floating valve, wherein the weight of the liftable opening member of the floating value is selected in such a way that the liftable opening member is lifted by the light phase below the sieve tray before the light phase floods the downcomer.

Mewes et al. teach to use a second shorter downcomer, which is flooded intentionally at high loads. The second downcomer can act as a bypass for excess light phase in order to prevent flooding of the main (longer) downcomer. The downside of the double downcomer concept is that the bypass flow does not contribute to the mass transfer on the next tray due to its negligible interfacial transfer area. Additionally, a controlled bypass of light phase to the next tray prevents flooding of a specific compartment (or chamber) but increases the flooding tendency of the next tray because the bypassed light phase directly increases the layer height below the next tray.

Goor et al. ("Hydrogen Peroxide" in "Ullmann's Encyclopedia of Industrial Chemistry", 15 April 2007, Wiley-VCH Verlag, Weinheim, XP055038254, ISBN 978-3-52-730673-2) describe extraction of hydrogen peroxide from the working solution and sieve tray extraction columns used for this purpose.

CN 103 803 503 A relates to a hydrogen peroxide extraction process with a side column. A countercurrent extraction separation of oxidized liquid is carried out in an extraction column, wherein the extraction column is a plate column, and an organic phase side-draw pipeline is disposed below at least one column plate.

US 6 270 062 B1, CN 109 381 886 A, CN 107 998 909 A and the publication of Engel (Welchem Process Technology, 31 July 2020, pages 1-7, XP055972652, URL: https://welchem.com/fileadmin/pub/WelChem_FloatValveTray_2020-3.pdf) describe gas-liquid mass transfer columns which comprise trays with float valves and are used, e.g., for distillation. However, no reference is made to liquid-liquid extraction.

The technical problems to be addressed by the present invention include increasing the productivity and extending the usual operation range of the extraction column as well as achieving a more stable operation of sieve tray extraction columns in the hydrogen peroxide manufacturing process.

The present invention overcomes the aforementioned problems associated with using of a double downcomer system known from the prior art by using a floating valve in a liquid-liquid extraction method of a hydrogen peroxide containing oxidized working solution of an anthraquinone process. The operation range of the extraction column as well as the extraction performance could be improved. Overall, a more stable operation of sieve tray extraction columns is possible by using a floating valve so that the mean flow rate of the oxidized working solution of an AO process and the daily production of hydrogen peroxide can be increased. Moreover, a floating valve does not negatively affect the extraction of hydrogen peroxide from an oxidized working solution.

### SUMMARY OF THE INVENTION

Particularly, the aforementioned objective can be achieved by an extraction method of a hydrogen peroxide containing oxidized working solution (102) of an anthraquinone process, preferably performed in a countercurrent extraction column (100) as defined herein, comprising contacting two immiscible liquids, the first liquid (102) having a lower density than the second liquid (101), in a countercurrent extraction column (100) comprising a plurality of sieve trays (130) each comprising a downcomer (132), wherein the second liquid (101) is introduced above the uppermost sieve tray and the first liquid (102) is introduced into the extraction column (100) below the lowermost sieve tray, characterized in that at least one of said sieve trays (130) is a valve sieve tray (130) comprising (a) a downcomer (132) with a length L_{d}, (232) extending downwards from the valve sieve tray (130), the length L_{d} (232) is the length of the downcomer calculated from the bottom of the valve sieve tray (130), and (b) at least one floating valve (131) comprising a liftable opening member (212) covering a valve hole (211) in the vale sieve tray (130) and can be lifted by the light phase (110) below the sieve tray (130), wherein the liftable opening member (212) has a weight wᵥₜ and/or an effective weight wᵥ and the weight wᵥₜ and/or the effective weight wᵥ is selected in such a way that the liftable opening member (212) is lifted by the light phase (110) below the sieve tray before the light phase (110) floods the downcomer (132).

The present invention also concerns a countercurrent liquid-liquid extraction column (100) for the extraction of a hydrogen peroxide containing oxidized working solution (102) of an anthraquinone process, preferably according to the extraction method as defined in any one of the preceding aspects, the extraction column (100) comprising a plurality of sieve trays (130) each having sieve holes (213) and a downcomer (132), wherein a second liquid (101) can be introduced above the uppermost sieve tray and a first liquid (102) can be introduced into the extraction column (100) below the lowermost sieve tray, wherein the first liquid (102) having a lower density than the second liquid (101) and wherein at least one of said sieve trays is a valve sieve tray (130) comprising: (i) a downcomer (132) with a length L_{d} (232), extending downwards from the valve sieve tray (130), the length L_{d} (232) is the length of the downcomer calculated from the bottom of the valve sieve tray (130), and (ii) at least one floating valve (131) comprising a liftable opening member (212) covering a valve hole (211) in the valve sieve tray (130) and can be lifted by the light phase (110) below the sieve tray (130), wherein the liftable opening member (212) has a weight wᵥₜ and/or an effective weight wᵥ and the weight wᵥₜ and/or the effective weight wᵥ is selected in such a way that the liftable opening member (212) is lifted by the light phase (110) below the sieve tray before the light phase (110) floods the downcomer (132), wherein the valve hole (211) having a hole area Aᵥ (310), the effective weight being the difference between the mass of the liftable opening member (212) and the mass of the amount of heavy phase displaced by the liftable opening member (212), the effective weight wᵥ being selected to provide a value of the expression wᵥ [kg]/(Aᵥ [m²]*Δρ[kg*m⁻³]) in the range of from 5 to 90 % of the length L_{d} (232), Δρ being the density difference between the light phase (110) below the valve sieve tray and the heavy phase (120) above the valve sieve tray (130). The countercurrent liquid-liquid extraction column (100) can also be used for liquid-liquid extraction and/or for extending the operation range, improve the operation stability and to increase extraction performance of sieve trays in extraction columns, preferably for the extraction of a hydrogen peroxide containing oxidized working solution (102) of an anthraquinone process.

Additionally, the present invention relates to a facility for producing a concentrated hydrogen peroxide solution by an anthraquinone process comprising (1) a hydrogenator for hydrogenating the working solution, to provide a hydrogenated working solution, (2) an oxidizer for oxidizing the hydrogenated working solution with an oxygen containing gas to provide an oxidized working solution comprising hydrogen peroxide, (3) a countercurrent liquid-liquid extraction column according to the invention, preferably using the method according to the invention, for extracting the oxidized working solution comprising hydrogen peroxide to provide aqueous hydrogen peroxide, and (4) a distillation unit for concentrating the aqueous hydrogen peroxide to provide a concentrated hydrogen peroxide solution.

These and other optional features and advantages of the present invention are described in more detail in the following description, aspects and figures. The claimed invention is defined in the appended claims.

### BRIEF DESCRIPTION OF THE DRAWINGS

Figure 1 (FIG. 1) shows a countercurrent liquid-liquid extraction column according to the invention.
Figure 2 (FIG. 2) shows a section of a valve sieve tray in an extraction column.
Figure 3a (FIG. 3a) shows a closed floating valve.
Figure 3b (FIG. 3b) shows a half lifted floating valve.
Figure 3c (FIG. 3c) shows a lifted floating valve.
Figure 3d (FIG. 3d) shows a pivoting floating valve.
Figure 3e (FIG. 3e) shows a view from the top of a floating valve.

### DETAILED DESCRIPTION

The diameter always refers to the inner diameter of an object unless otherwise indicated. It must be noted that, as used in the specification and the appended claims and aspects, the singular forms "a," "an" and "the" include plural referents unless the context clearly dictates otherwise. Thus, for example, reference to "downcomer" includes multiple downcomers, and the like. The present invention is described with reference to the accompanying figure, which do not limit the scope and ambit of the invention.

The term "immiscible" refer in the context of the present invention to the liquids, having a low solubility in each other, e.g. less than 50 g of the one liquid in 1000 g of another liquid. A mixture of such immiscible liquids will form two separate phases in the temperature range applied for the inventive extraction process.

Hydrogen peroxide can be produced in an AO process as described above. Generally, the AO process comprises the following steps: hydrogenating a working solution, said working solution comprising an alkylanthraquinone, an alkyltetrahydroanthraquinone or both, contacting said working solution with compressed hydrogen in a hydrogenator to provide a hydrogenated working solution comprising an alkylanthrahydroquinone, an alkyltetrahydroanthrahydroquinone or both, oxidizing said hydrogenated working solution with a compressed oxygen containing gas, such as compressed air or compressed enriched oxygen containing air, in an oxidation reactor to provide an oxidized working solution comprising hydrogen peroxide and an alkylanthraquinone, an alkyltetrahydroanthraquinone or both, extracting hydrogen peroxide from oxidized working solution obtained to provide an aqueous hydrogen peroxide solution, and concentrating the aqueous hydrogen peroxide solution obtained in at least one distillation unit.

The extraction of said extracting hydrogen peroxide containing oxidized working solution is done by the method according to the invention using the countercurrent liquid-liquid extraction column according to the invention.

The countercurrent liquid-liquid extraction column can be present in a facility for producing a concentrated hydrogen peroxide solution by an anthraquinone process. The facility comprises (1) a hydrogenator for hydrogenating the working solution, to provide a hydrogenated working solution, (2) an oxidizer for oxidizing the hydrogenated working solution with an oxygen containing gas to provide an oxidized working solution comprising hydrogen peroxide, (3) a countercurrent liquid-liquid extraction column according to the invention, for extracting the oxidized working solution comprising hydrogen peroxide to provide aqueous hydrogen peroxide, and (4) a distillation unit for concentrating the aqueous hydrogen peroxide to provide a concentrated hydrogen peroxide solution.

The inventive extraction method is suitable for the extraction of a hydrogen peroxide containing oxidized working solution of an anthraquinone process, and preferably performed in a countercurrent extraction column according to the invention. The method comprises contacting two immiscible liquids, the first liquid having a lower density than the second liquid, in a countercurrent extraction column comprising a plurality of sieve trays each comprising a downcomer, wherein the second liquid is introduced above the uppermost sieve tray and the first liquid is introduced into the extraction column below the lowermost sieve tray, characterized in that at least one of said sieve trays is a valve sieve tray comprising (a) a downcomer with a length L_{d}, extending downwards from the valve sieve tray, the length L_{d} is the length of the downcomer calculated from the bottom of the valve sieve tray, and (b) at least one floating valve comprising a liftable opening member covering a valve hole in the vale sieve tray and can be lifted by the light phase below the sieve tray. Suitable for the extraction of a hydrogen peroxide containing oxidized working solution of an anthraquinone process means that the method can be used for the extraction of said hydrogen peroxide containing oxidized working solution but can also be used for the extraction of other solution. However, it is preferred that the method is used for the extraction of a hydrogen peroxide containing oxidized working solution of an anthraquinone process.

The inventive countercurrent liquid-liquid extraction column for the extraction of a hydrogen peroxide containing oxidized working solution of an anthraquinone process is preferably used for the extraction method according to the invention. The extraction column comprises a plurality of sieve trays each having sieve holes and a downcomer, wherein a second liquid can be introduced above the uppermost sieve tray and a first liquid is introduced into the extraction column below the lowermost sieve tray, wherein the first liquid having a lower density than the second liquid and wherein at least one of said sieve trays is a valve sieve tray comprising (i) a downcomer with a length L_{d}, extending downwards from the valve sieve tray, the length L_{d} is the length of the downcomer calculated from the bottom of the valve sieve tray, and (ii) at least one floating valve comprises a liftable opening member covering a valve hole in the valve sieve tray and can be lifted by the light phase below the sieve tray.

The light phase, also commonly referred to as the "dispersed phase" in the AO process, is considered as the phase below the respective sieve tray and the heavy phase, also usually referred to as the "continuous phase" in the AO process, is considered as the phase above the respective sieve tray. The light phase is generally derived from the first liquid and the heavy phase is generally derived from the second liquid. The first liquid is preferably derived from hydrogen peroxide containing oxidized working solution of an anthraquinone process, wherein the hydrogen peroxide should be extracted using the second liquid. The second liquid is preferably water for extracting said hydrogen peroxide. Accordingly, the heavy phase should be water used for extraction of hydrogen peroxide from the light phase. Thus, the concentration of hydrogen peroxide present in the heavy phase increases with respect to the flow direction of the heavy phase. The flow direction of the heavy phase is downwards through the downcomers of the sieve trays. The hydrogen peroxide concentration of the light phase decreases in the flow direction. The flow direction of the light phase is upwards through the holes of the sieve trays including the valve holes in an open position. It is desired that the concentration of the aqueous hydrogen peroxide obtained after the extraction (withdrawn at the bottom of the extraction column) is 30 to 55 wt.-%, preferably 35 to 50 wt.-%, more preferably 40 to 50 wt.-%, based on the total weight of the aqueous hydrogen peroxide (i.e. extracted hydrogen peroxide solution). The heavy phase that flows downwards and the light phase that flows upwards are mixed so that the hydrogen peroxide can be extracted from the light phase. Accordingly, in a specific chamber of the extraction column (between two sieve trays) the light phase can be dispersed in the heavy phase or vice versa. However, it is desired that a homogeneous light phase is formed below the sieve tray and a homogeneous heavy phase is formed on the top of the sieve tray. Thus, the light phase and the heavy phase are substantially or completely separated from each other below the sieve tray. Some or all the sieve trays may be equipped with coalescence nets placed beneath the corresponding sieve trays facilitating coalescence of the droplets of the light phase and separation of the phases beneath the sieve trays.

As mentioned above, the extraction column (i.e. the countercurrent liquid-liquid extraction column) comprises a plurality of sieve trays each having sieve holes and a downcomer. At least one of said sieve trays is a valve sieve tray. It is desired that all sieve trays are valve sieve trays. Generally, an extraction column comprises 2 to 100, preferably 5 to 80, more preferably 15 to 50, most preferably 20 to 40, sieve trays. Increasing the number of sieve trays while keeping the compartment height, i.e. the distance between the adjacent sieve trays, constant, improves the extraction performance.

Each sieve tray comprises at least one downcomer. For instance, the sieve trays can comprise two downcomers, particularly a first and a second downcomer, wherein the first downcomer may have the same length or be longer than the second downcomer. The short downcomer can prevent the flooding of the long downcomer.

The length L_{d} of the downcomer of the at least one valve sieve tray can be 100 to 1400 mm, preferably 200 to 1200 mm, more preferably 300 to 1000 mm, and most preferably 350 to 850 mm. The length L_{d} can be adjusted according to the process requirements. A greater length of the downcomer can keep the maximal height of the light phase layer under the sieve tray larger. If multiple downcomers are used in a respective sieve tray, the downcomers can have the same length. Alternatively, a first downcomer has a longer length than the second downcomer and the first downcomer has a length as defined above, whereas the second downcomer has a length of from 10 to 90 %, such as 30 to 85 %, of the length of the first downcomer.

It is preferred that the downcomers of adjacent sieve trays are located off-center of the axis of the countercurrent extraction column on opposite sides of the axis.

A deflection plate covering the lower opening of the downcomer should be arranged at a distance below the downcomer to prevent the light phase entering the downcomer. However, different designs are also possible to prevent the light phase entering the downcomers. For instance, a bended downcomer or a downcomer reaching the lower sieve tray, wherein the lower sieve tray below the entrance of the downcomer does not comprise holes. Preferably, said deflection plate is at a distance providing an area of outflow for heavy phase between the downcomer and the deflection plate, which is from 0.1 to 2, preferably 0.6 to 1.25, times the cross-section area of the downcomer. In other words, said deflection plate is preferably at a distance providing an area of the gap between the deflection plate and the downcomer which from 0.1 to 2, preferably 0.6 to 1.25, times the cross-section area of the downcomer.

The optimal diameter of the downcomer may depend on the diameter of the extraction column and the flow rate used. The ratio of the area of all downcomer cross-sections to the area of the extraction column cross-section is preferably in the range 0.001-0.1, more preferably 0.003-0.05, more preferably 0.005-0.02. All downcomers can have the same aforementioned diameter. It is desired that the longest downcomer of the respective sieve tray has the aforementioned diameter. A second downcomer that is shorter than the first downcomer has preferably a smaller diameter, such as 50 to 90 % of the diameter of the first downcomer.

The sieve trays comprise holes so that the light phase can flow through said holes, whereas the heavy phase flows through the downcomer. A valve sieve tray additionally comprises valve holes, i.e. holes that are covered by a valve. According to the present invention, the valve is a floating valve comprising a liftable opening member. Thus, the valve sieve tray comprises a valve hole covered by a liftable opening member of the floating valve. The holes without a valve can be considered as unvalved holes. The at least one floating valve should be on the upper side of the sieve tray so that the light phase is able to lift the opening member so that the floating valve is in an open position.

A liftable opening member of a floating valve means that said opening member can be lifted by the light phase, particularly before the downcomer is flooded by the light phase. Thus, the floating valve according to the present invention becomes opened for a light phase if the light phase level under the sieve tray reaches a specific height. Consequently, the floating valve according to the present invention enables the respective sieve tray to automatically adjust the height of the light phase in order to avoid the flooding of the downcomer. Surprisingly, the floating valve does not negatively affect or affects only insignificantly the performance of extraction of hydrogen peroxide in a liquid- liquid extraction column. A second shorter downcomer that is used as a bypass for the excess light phase might decrease the risk of flooding the first longer downcomer but negatively affects the extraction of hydrogen peroxide in a liquid- liquid extraction column.

The liftable opening member has a weight wᵥₜ and/or an effective weight wᵥ. The effective weight wᵥ is the difference between the mass of the liftable opening member and the mass of the amount of heavy phase displaced by the liftable opening member. It is particularly preferred that the weight wᵥₜ and/or the effective weight wᵥ of the liftable opening member is selected in such a way that the liftable opening member is lifted by the light phase below the sieve tray before the light phase floods the downcomer. Accordingly, weight of the liftable opening member is used to control whether the floating valve is in an open position. The floating valve may preferably be opened to a varying extent, i.e. from 0% (completely closed) to 100% (completely opened) depending on the height of the layer of the light phase underneath the sieve tray. The floating valve may be completely closed, completely opened or be opened to an extent of more than 0% but less than 100% during the extraction process. Since the floating valve is primarily used to prevent the flooding of the downcomer, the weight of the liftable opening member should be chosen in such a way that the floating valve is in a completely open position before the light phase is able to bypass the sieve try via the downcomer.

Accordingly, the effective weight wᵥ and/or the weight wᵥₜ of the liftable opening member should be selected in such a way that the liftable opening member is in an open position if the light phase below the sieve tray will reach 5 to 99 %, preferably 20 to 90%, more preferably 40 to 85 %, most preferably 70 to 95%, of the length L_{d} of the downcomer. The length of the downcomer generally refers to the longest downcomer of the respective sieve tray. The floating valves can be considered as flooding inhibiting floating vales.

It is assumed that the floating valve opens if the pressure force resulting from the static pressure of the light phase below the tray exceeds the weight force of the valve. The pressure force results from the height of light phase below the sieve tray, the density difference between light and heavy phase, gravitational acceleration, and the valve hole area Aᵥ in the tray below the valve plate. For determination of the effective weight force, the mass of the valve plate and its buoyancy must be considered.

The weights of the individual liftable floating members can generally vary within a range from -20 to +20 wt.%, so that at different heights of the light phase with respect to the downcomer, the flow of the light phase through the sieve tray can be continuously increased and a continuous transition into the open position can be achieved.

The valve hole or each valve hole has a hole area Aᵥ, the effective weight being the difference between the mass of the liftable opening member and the mass of the amount of heavy phase displaced by the liftable opening member, the effective weight wᵥ being selected to provide a value of the expression wᵥ/(Aᵥ*Δρ) (including the units wᵥ[kg]/(Aᵥ [m²]*Δρ[kg*m⁻³]) in the range of from 5 to 90 %, preferably 5 to 70%, more preferably 60 to 80 %, most preferably 10 to 50% of the length L_{d} [m], Δρ being the density difference between the heavy phase above the valve sieve tray and the light phase below the valve sieve tray.

The weight of the liftable opening member can vary depending on the hole sizes in the sieve trays and generally be 0.002 kg to 0.1 kg, preferably 0.003 to 0.070 kg, more preferably 0.005 to 0.050 kg, and most preferably 0.010 to 0.030. The thickness of the liftable opening member can be 0.25 to 5 mm, preferably 0.5 to 4 mm, more preferably 1to 3 mm, and most preferably 1.5 to 2.5 mm. The diameter of the liftable opening member should be higher than the diameter of the valve hole so that the liftable opening member can cover the valve hole. However, the liftable opening member can also be a square sheet. The liftable opening member is preferably made of a metal, such as steel.

The holes of the sieve tray covered by the liftable opening member can have diameter in the range of from 5 to 100 mm, preferably 10 to 75 mm, more preferably 15 to 60 mm, and most preferably 20 to 50 mm. The holes of the sieve tray not covered by the liftable opening member or floating valves can have a diameter in the range of from 0.4 to 10 mm, preferably 0.6 to 8 mm, more preferably 0.65 to 5.5 mm, and most preferably 1.5 to 4.0 mm. Generally, the holes of the sieve tray not covered by the liftable opening member or floating valves have a smaller diameter than the holes of the sieve tray covered by the liftable opening member. The floating vales are used to prevent the flooding of the downcomer (or longest downcomer) and thus, the diameter of the valve holes should be higher than the diameter of the unvalved holes because a higher diameter results in a higher flow rate of the light phase into the next extraction chamber. The ratio of the diameter of the valve holes to the unvalved holes should be 1/1 to 300/1, preferably 1.1/1 to 100/1, more preferably 1.2/1 to 50/1, and most preferably 1.3/1 to 10/1.

The floating valve can comprise a cage assembly extending upward from the valve sieve tray and enclosing the liftable opening member. The cage assembly is a barrier for the liftable opening member.

The liftable opening member can also comprise legs extending through the valve hole, the end of each leg comprising an outward directed protrusion engaging with the sieve tray when the liftable opening member is lifted by light phase passing through the valve hole.

Normally, up to 50, typically 10 to 20 of floating valves, each covering a valve hole, are present on each valve sieve tray per 1 m² of the sieve tray area. A higher number of floating valves more effectively prevent the flooding of the downcomer(s).

The number of unvalved holes per 1 m² of the sieve tray area is typically in the range 2000-6000 holes/m².

More than 60 vol-%, preferably 61 to 90 vol-%, more preferably 65 to 85 vol-%, and most preferably 70 to 80 vol-% of the light phase should pass through the unvalved holes when the floating valves are in an open position, based on the total volume passing the sieve tray through the valve and unvalved holes.

Beside the unvalved and valve holes, the at least one floating valve can comprise one or more holes extending through the liftable opening member. Thus, the liftable opening member can comprise multiply holes that can have the same diameter or hole area than the unvalved holes. Accordingly, light phase is able to pass the holes on the liftable opening member even if the floating valve is in a closed position and the extraction performance can be increased since a higher surface area of the sieve tray can be used of the extraction of the light phase.

As mentioned above, the method according to the invention is used particularly for extracting a hydrogen peroxide containing oxidized working solution of an anthraquinone process. Accordingly, the first liquid can be an oxidized working solution of an anthraquinone process comprising dissolved hydrogen peroxide and the second liquid can be an aqueous medium, and wherein an aqueous hydrogen peroxide solution is withdrawn at the bottom of the extraction column and an extracted working solution is withdrawn above the feed point for the aqueous medium.

The aqueous hydrogen peroxide solution withdrawn from the bottom of the extraction column can be further concentrated in a subsequent step to a hydrogen peroxide concentration of from 35 to 90 % by weight. The concentration can be done in a distillation column.

The method and the countercurrent liquid-liquid extraction column as described comprising a plurality of sieve trays with floating valves can also be adapted and used for inverted phase dispersion, comprising second liquid droplets flowing downwards, with upcomers extending upwards from the sieve trays and floating valves opening downwards from the bottom of the sieve trays.

### FIGURES

The invention will now be described with reference to the accompanying figure which do not limit the scope and ambit of the invention. The description provided is purely by way of example and illustration. However, specific features exemplified in the figures can be used to further restrict the scope of the invention and claims.

FIG. 1 refers to a countercurrent liquid-liquid extraction column (100) according to the invention. The column comprises an inlet for the first liquid (102), i.e. a hydrogen peroxide containing oxidized working solution of an anthraquinone process. Accordingly, the countercurrent liquid-liquid extraction column (100) is part of a facility for producing a concentrated hydrogen peroxide solution by an anthraquinone process. The inlet for said working solution (102) is introduced into the extraction column (100) below the lowermost sieve tray (130). The sieve trays (130) in FIG. 1 are valve sieve trays (130) each comprising a floating valve (131).

Moreover, the column comprises an inlet for the second liquid (101), i.e. water, that is introduced above the uppermost sieve tray. The second liquid (101) has a higher density than the first liquid (102) so that the second liquid (101) flows downwards through the downcomer (132) (indicated with an arrow) and the first liquid (101) flows upwards through the holes and valve holes if they are in an open position. The second liquid (101) provides the heavy phase (120) in the extraction column (100) and the first liquid (102) provides the light phase (110) in the extraction column (100).

In FIG. 1, three valve sieve trays (130) are shown but it is possible to install more than three valve sieve trays as indicated above. The downcomers (132) are arranged in such a way that they are displaced with respect to the adjacent sieve tray (130) comprising a downcomer (132). It is preferred that the downcomer is on the opposite side and thus, remote from the adjacent sieve tray (130) comprising a downcomer (132). Accordingly, the heavy phase (120) cannot flow directly to the lowermost sieve tray (130) but flows through each entire extraction chamber (or compartment) between two sieve trays (130) and a better extraction performance can be achieved.

The extraction column further comprises an outlet for the aqueous hydrogen peroxide solution (103) and an outlet for the extracted working solution (104).

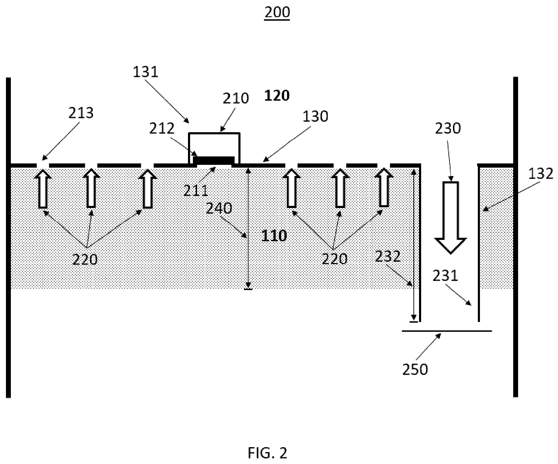

FIG. 2 is section of a valve sieve tray (200) in an extraction column (100). The light phase (110) is indicated as a dotted area and below the valve sieve tray (130). Above the valve sieve tray, a heavy phase (120) is present that flows (230) through the downcomer (132). Below the dotted light phase (110) another heavy phase (120) is formed. The light phase (110) flows (220) through the holes (213) in the valve sieve tray (130) indicated by the arrows (220). If the floating valve (131) is in an open position, the light phase (110) will also flow through the open floating valve (131). The open position of the floating valve (131) depends on the height or layer height of the light phase (240) and the weight of the liftable opening member (212). It is preferred that the floating valve (131) is in an open position if the height of the light phase Hₗₚ (240) is below the length of the downcomer (232). Thus, the floating valve (131) opens and excess light phase (110) is able to flow through the valve holes (211) and the layer height of the light phase (240) can be reduced. This allows a stable operation of the extraction column (100) for hydrogen peroxide working solution at high flow rates or flow rates close to the maximum flow rate of the extraction column (100). The floating valves (131) comprise a cage (210) for the liftable opening member (212) so that the motion of the liftable opening member (212) can be stopped.

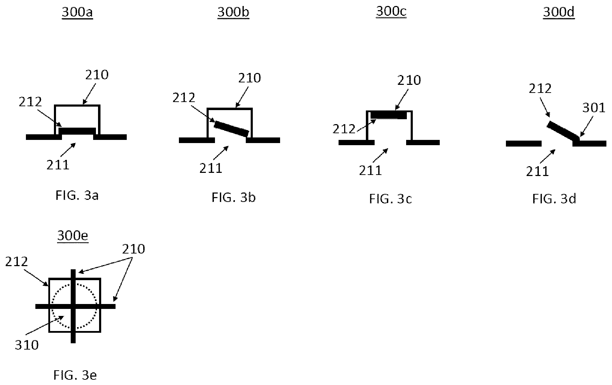

Figures 3a to 3c show floating valves (131) in different positions (300a, 300b, 300c). FIG. 3a reveals a floating valve (131) in a closed position (300a). Accordingly, the light phase (110) has a height (240) that is not sufficient to lift the liftable opening member (212). Accordingly, the extraction column (100) can work normally. If the layer height (240) of the light phase (110) reaches a specific point, the liftable opening member (212) transitions in a partly open position (FIG. 3b, 300b). If, however, the layer height (240) of the light phase (110) further increases, the liftable opening member (212) transitions in an open position (FIG. 3c, 300c) and the light phase (110) can flow unhindered through the valve hole (211). In said figures a cage (210) for the liftable opening member (212) is indicated, so that the liftable opening member (212) stops at a specific height.

FIG. 300d reveals another type of floating valve, wherein a liftable opening member (212) is attached to the surface of the valve sieve tray (130) via a pivoting fixation (310).

FIG. 300e is a view from the top of a floating valve as shown in figures 300a to 300c. The cage (210) of this floating valve are four legs connected to the surface of the valve sieve tray (130) that is able to hold the liftable opening member (212) in position and stops the motion at a specific height. The dotted line in FIG: 300e represent the valve hole (310) covered by the liftable opening member (212). From the top view, the diameter of the hole area can be determined.

### EXAMPLES

### Comparative Example 1: Extraction column without floating valves

A countercurrent liquid-liquid extraction column comprising a plurality of sieve trays, each having sieve holes and a downcomer, was used to extract a hydrogen peroxide containing oxidized working solution obtained from an anthraquinone process. The sieve trays did not have a floating valve. Instable operation could be seen at a flow rate of the oxidized working solution of 128 m³/h.

### Comparative Example 2: Extraction column without floating valves and double downcomers having different lengths

A countercurrent liquid-liquid extraction column comprising a plurality of sieve trays, each having sieve holes and two downcomers with different lengths, was used to extract a hydrogen peroxide containing oxidized working solution obtained from an anthraquinone process. The sieve trays did not have a floating valve. A stable operation could be achieved at a flow rate of the oxidized working solution of above 128 m³/h but the extraction performance was significantly lower.

### Example 3: Extraction column with floating valves

A countercurrent liquid-liquid extraction column comprising a plurality of valve sieve trays, each having sieve holes and a downcomer, was used to extract a hydrogen peroxide containing oxidized working solution obtained from an anthraquinone process. The sieve trays comprised at least one floating valve. A stable operation could be achieved using a flow rate of the oxidized working solution of above 140 m³/h without lowering the extraction performance of the hydrogen peroxide. The daily production could be increased by above 10 %. Accordingly, the extraction of hydrogen peroxide was not negatively affected by using a floating vale. It was observed that the light phase below the floating valves was sufficiently separated from the heavy phase so that at higher flow rates the floating valves were in an open position and the excess of light phase could flow through the floating valve holes. Thus, the operation range of the extraction column could be increase and at the same time, the extraction performance with respect to the hydrogen peroxide was not negatively affected.

### List of reference signs:

- 100: A countercurrent liquid-liquid extraction column
- 101: Second liquid
- 102: First liquid
- 103: Aqueous hydrogen peroxide solution
- 103: Extracted working solution
- 110: Light phase
- 120: Heavy phase
- 130: Valve sieve tray
- 131: Floating valve
- 132: Downcomer
- 200: Section of a valve sieve tray in an extraction column

- 210: Cage assembly
- 211: Valve hole
- 212: Liftable opening member
- 213: Sieve holes
- 220: Flow direction of the light phase
- 230: Flow direction of the heavy phase
- 231: Length of the downcomer extending downwards from the valve sieve tray
- 240: Hight of the light phase
- 250: Deflection plate
- 300a: Closed floating valve
- 300b: Half lifted floating valve
- 300c: Lifted floating valve
- 300d: Pivoting floating valve
- 300e: View from the top of a floating valve
- 301: Pivoting fixation
- 310: Hole area

It will be appreciated that various modifications can be made, and that many changes can be made in the preferred embodiments without departing from the principle of the invention. The claimed invention is defined in the appended claims. The present disclosure is further described by the following aspects.

## Claims

1. An extraction method for the extraction of a hydrogen peroxide containing oxidized working solution (102) of an anthraquinone process, comprising contacting two immiscible liquids, the first liquid (102) having a lower density than the second liquid (101), in a countercurrent extraction column (100) comprising a plurality of sieve trays (130) each comprising a downcomer (132), wherein the second liquid (101) is introduced above the uppermost sieve tray and the first liquid (102) is introduced into the extraction column (100) below the lowermost sieve tray, wherein the second liquid (101) provides a heavy phase (120) in the countercurrent extraction column (100) and the first liquid (102) provides a light phase (110) in the countercurrent extraction column (100), **characterized in that** at least one of said sieve trays is a valve sieve tray (130) comprising
(a) a downcomer (132) with a length L_{d}, (232) extending downwards from the valve sieve tray (130), and
(b) at least one floating valve (131) comprising a liftable opening member (212) covering a valve hole (211) in the valve sieve tray (130) and can be lifted by the light phase (110) below the sieve tray (130), wherein the liftable opening member (212) has an effective weight wᵥ, wherein the effective weight wᵥ is defined as the difference between the mass of the liftable opening member (212) and the mass of the amount of heavy phase displaced by the liftable opening member (212)and wherein the effective weight wᵥ is selected in such a way that the liftable opening member (212) is lifted by the light phase (110) below the sieve tray before the light phase (110) floods the downcomer (132),
wherein the valve hole (211) having a hole area Aᵥ (310), and wherein the effective weight wᵥ being selected to provide a value of the expression wᵥ [kg]/(Aᵥ [m²]*Δρ[kg*m⁻³]) in the range of from 5 to 90 % of the length L_{d} (232), Δρ being the density difference between the light phase (110) below the valve sieve tray and the heavy phase (120) above the valve sieve tray (130).

2. The extraction method according to claim 1, wherein the effective weight wᵥ being selected to provide a value of the expression wᵥ[kg]/(Aᵥ[m²]*Δρ[kg*m⁻³]) in the range of from 5 to 70%, preferably 60 to 80 %, more preferably 10 to 50% of the length L_{d} (232) [m],.

3. The extraction method according to claim 1 , wherein the effective weight wᵥ of the liftable opening member (212) is selected so that the liftable opening member (212) is in an open position (300c) if the light phase (110) below the sieve tray will reach 5 to 99 %, preferably 20 to 90%, more preferably 40 to 85 %, most preferably 70 to 95%, of the length L_{d} (232) of the downcomer (132).

4. The extraction method according to any one of the preceding claims, wherein the weight of the liftable opening member (212) is 0.002 kg to 0.1 kg, preferably 0.003 to 0.070 kg, more preferably 0.005 to 0.050 kg, and most preferably 0.010 to 0.030 kg.

5. The extraction method according to any one of the preceding claims, wherein the length L_{d} (232) of downcomer (132) of the at least one valve sieve tray (130) is 100 to 1400 mm, preferably 200 to 1200 mm, more preferably 300 to 1000 mm, and most preferably 350 to 850 mm.

6. The extraction method according to any one of the preceding claims, wherein the first liquid (102) is an oxidized working solution of an anthraquinone process comprising dissolved hydrogen peroxide and the second liquid (101) is an aqueous medium, and wherein an aqueous hydrogen peroxide solution (103) is withdrawn at the bottom of the extraction column and an extracted working solution (103) is withdrawn above the feed point for the aqueous medium.

7. A countercurrent liquid-liquid extraction column (100) for the extraction of a hydrogen peroxide containing oxidized working solution (102) of an anthraquinone process, the extraction column (100) comprising a plurality of sieve trays (130) each having sieve holes (213) and a downcomer (132), wherein a second liquid (101) can be introduced above the uppermost sieve tray and a first liquid (102) can be introduced into the extraction column (100) below the lowermost sieve tray, wherein the first liquid (102) having a lower density than the second liquid (101), wherein the second liquid (101) can provide a heavy phase (120) in the extraction column (100) and the first liquid (102) can provide a light phase (110) in the extraction column (100), wherein
at least one of said sieve trays is a valve sieve tray (130) comprising:
(i) a downcomer (132) with a length L_{d} (232), extending downwards from the valve sieve tray (130), and
(ii) at least one floating valve (131) comprising a liftable opening member (212) covering a valve hole (211) in the valve sieve tray (130) and can be lifted by the light phase (110) below the sieve tray (130), wherein the liftable opening member (212) has an effective weight wᵥ and the effective weight wᵥ is selected in such a way that the liftable opening member (212) is lifted by the light phase (110) below the sieve tray before the light phase (110) floods the downcomer (132); and
wherein the valve hole (211) having a hole area Aᵥ (310), the effective weight being the difference between the mass of the liftable opening member (212) and the mass of the amount of heavy phase displaced by the liftable opening member (212), the effective weight wᵥ being selected to provide a value of the expression wᵥ [kg]/(Aᵥ [m²]*Δρ[kg*m⁻³]) in the range of from 5 to 90 % of the length L_{d} (232), Δρ being the density difference between the light phase (110) below the valve sieve tray and the heavy phase (120) above the valve sieve tray (130).

8. The countercurrent liquid-liquid extraction column according to claim 7, wherein the effective weight wᵥ of the liftable opening member (212) is selected so that the liftable opening member (212) is in an open position (300c) if the light phase (110) below the sieve tray will reach 20 to 90%, preferably 40 to 85 % of the length L_{d} (232) of the downcomer (132).

9. The countercurrent liquid-liquid extraction column according to claim 7 or 8, wherein the effective weight wᵥ is selected to provide a value of the expression wᵥ [kg]/(Aᵥ [m²]*Δρ[kg*m⁻³]) in the range of from 5 to 70%, preferably 60 to 80 %, more preferably 10 to 50% of the length L_{d} (232).

10. The countercurrent liquid-liquid extraction column according to claims 7 to 9, wherein the length L_{d} (232) of downcomer (132) of the at least one valve sieve tray (130) is 100 to 1400 mm, preferably 200 to 1200 mm, more preferably 300 to 1000 mm, and most preferably 350 to 850 mm.

11. Use of a countercurrent liquid-liquid extraction column (100) according to any one of claims 7 to 10 for liquid-liquid extraction and/or for extending the operation range, improve the operation stability and to increase extraction performance of sieve trays in extraction columns, preferably for the extraction of a hydrogen peroxide containing oxidized working solution (102) of an anthraquinone process.

12. A facility for producing a concentrated hydrogen peroxide solution by an anthraquinone process comprising:
(1) a hydrogenator for hydrogenating the working solution, to provide a hydrogenated working solution,
(2) an oxidizer for oxidizing the hydrogenated working solution with an oxygen containing gas to provide an oxidized working solution comprising hydrogen peroxide,
(3) a countercurrent liquid-liquid extraction column according to any of claims 7 to 10, for extracting the oxidized working solution comprising hydrogen peroxide to provide aqueous hydrogen peroxide, and
(4) a distillation unit for concentrating the aqueous hydrogen peroxide to provide a concentrated hydrogen peroxide solution.

## Patentansprüche

1. Extraktionsverfahren für die Extraktion einer Wasserstoffperoxid enthaltenden oxidierten Arbeitslösung (102) eines Anthrachinon-Prozesses, umfassend Kontaktieren von zwei nicht mischbaren Flüssigkeiten, wobei die erste Flüssigkeit (102) eine geringere Dichte als die zweite Flüssigkeit (101) aufweist, in einer Gegenstrom-Extraktionskolonne (100), die mehrere Siebböden (130) umfasst, die jeweils ein Fallrohr (132) umfassen, wobei die zweite Flüssigkeit (101) oberhalb des obersten Siebbodens und die erste Flüssigkeit (102) unterhalb des untersten Siebbodens in die Extraktionskolonne (100) eingeleitet wird, wobei die zweite Flüssigkeit (101) in der Gegenstrom-Extraktionskolonne (100) eine schwere Phase (120) bereitstellt und die erste Flüssigkeit (102) in der Gegenstrom-Extraktionskolonne (100) eine leichte Phase (110) bereitstellt, **dadurch gekennzeichnet, dass** mindestens einer der Siebböden ein Ventilsiebboden (130) ist, Folgendes umfassend
(a) ein Fallrohr (132) mit einer Länge L_{d}, (232), das sich von dem Ventilsiebboden (130) nach unten erstreckt, und
(b) mindestens ein Schwimmventil (131), das ein anhebbares Öffnungselement (212) umfasst, das eine Ventilbohrung (211) in dem Ventilsiebboden (130) bedeckt und durch die leichte Phase (110) unterhalb des Siebbodens (130) angehoben werden kann, wobei das anhebbare Öffnungselement (212) ein effektives Gewicht wᵥ aufweist, wobei das effektive Gewicht wᵥ als die Differenz zwischen der Masse des anhebbaren Öffnungselements (212) und der Masse der Menge an schwerer Phase definiert ist, die durch das anhebbare Öffnungselement (212) verdrängt wird, und wobei das effektive Gewicht wᵥ derart ausgewählt ist, dass das anhebbare Öffnungselement (212) durch die leichte Phase (110) unterhalb des Siebbodens angehoben wird, bevor die leichte Phase (110) das Fallrohr (132) flutet,
wobei das Ventilloch (211) eine Lochfläche Aᵥ (310) aufweist und wobei das effektive Gewicht wᵥ ausgewählt ist, um einen Wert des Ausdrucks wᵥ[kg]/(Aᵥ[m²]*Δρ[kg*m⁻³]) im Bereich von 5 bis 90 % der Länge L_{d} (232) bereitzustellen, wobei Δρ die Dichtedifferenz zwischen der leichten Phase (110) unterhalb des Ventilsiebbodens und der schweren Phase (120) oberhalb des Ventilsiebbodens (130) ist.

2. Extraktionsverfahren nach Anspruch 1, wobei das effektive Gewicht wᵥ so ausgewählt ist, dass ein Wert des Ausdrucks wᵥ[kg]/(Aᵥ[m²]*Δρ[kg*m⁻³]) im Bereich von 5 bis 70 %, bevorzugt von 60 bis 80 %, besonders bevorzugt von 10 bis 50 %, der Länge L_{d} (232) [m], bereitgestellt wird.

3. Extraktionsverfahren nach Anspruch 1, wobei das effektive Gewicht wᵥ des anhebbaren Öffnungselements (212) derart ausgewählt ist, dass sich das anhebbare Öffnungselement (212) in einer offenen Position (300c) befindet, wenn die leichte Phase (110) unterhalb des Siebbodens 5 bis 99 %, bevorzugt 20 bis 90 %, besonders bevorzugt 40 bis 85 %, am meisten bevorzugt 70 bis 95 %, der Länge L_{d} (232) des Fallrohrs (132) erreicht.

4. Extraktionsverfahren nach einem der vorhergehenden Ansprüche, wobei das Gewicht des anhebbaren Öffnungselements (212) 0,002 kg bis 0,1 kg, bevorzugt 0,003 bis 0,070 kg, besonders bevorzugt 0,005 bis 0,050 kg und am meisten bevorzugt 0,010 bis 0,030 kg ist.

5. Extraktionsverfahren nach einem der vorhergehenden Ansprüche, wobei die Länge L_{d} (232) des Fallrohrs (132) des mindestens einen Ventilsiebbodens (130) 100 bis 1400 mm, bevorzugt 200 bis 1200 mm, besonders bevorzugt 300 bis 1000 mm und am meisten bevorzugt 350 bis 850 mm ist.

6. Extraktionsverfahren nach einem der vorhergehenden Ansprüche, wobei die erste Flüssigkeit (102) eine oxidierte Arbeitslösung eines Anthrachinon-Prozesses ist, die gelöstes Wasserstoffperoxid umfasst, und die zweite Flüssigkeit (101) ein wässriges Medium ist und wobei eine wässrige Wasserstoffperoxid-Lösung (103) an dem Boden der Extraktionskolonne abgezogen wird und eine extrahierte Arbeitslösung (103) oberhalb des Zufuhrpunkts für das wässrige Medium abgezogen wird.

7. Flüssig-Flüssig-Gegenstrom-Extraktionskolonne
(100) zur Extraktion einer Wasserstoffperoxid enthaltenden oxidierten Arbeitslösung (102) eines Anthrachinon-Prozesses, wobei die Extraktionskolonne (100) mehrere Siebböden (130), die jeweils Sieblöcher (213) aufweisen, und ein Fallrohr (132) umfasst, wobei eine zweite Flüssigkeit (101) oberhalb des obersten Siebbodens eingeleitet werden kann und eine erste Flüssigkeit (102) unterhalb des untersten Siebbodens in die Extraktionskolonne (100) eingeleitet werden kann, wobei die erste Flüssigkeit (102) eine geringere Dichte als die zweite Flüssigkeit (101) aufweist, wobei die zweite Flüssigkeit (101) eine schwere Phase (120) in der Extraktionskolonne (100) bereitstellen kann und die erste Flüssigkeit (102) eine leichte Phase (110) in der Extraktionskolonne (100) bereitstellen kann, wobei
mindestens einer der Siebböden ein Ventilsiebboden (130) ist, Folgendes umfassend:
(i) ein Fallrohr (132) mit einer Länge L_{d} (232), die sich von dem Ventilsiebboden (130) nach unten erstreckt, und
(ii) mindestens ein Schwimmventil (131), das ein anhebbares Öffnungselement (212) umfasst, das eine Ventilbohrung (211) in dem Ventilsiebboden (130) bedeckt und durch die leichte Phase (110) unterhalb des Siebbodens (130) angehoben werden kann, wobei das anhebbare Öffnungselement (212) ein effektives Gewicht wᵥ aufweist und das effektive Gewicht wᵥ derart ausgewählt ist, dass das anhebbare Öffnungselement (212) durch die leichte Phase (110) unterhalb des Siebbodens angehoben wird, bevor die leichte Phase (110) das Fallrohr (132) flutet; und
wobei das Ventilloch (211) eine Lochfläche Aᵥ (310) aufweist, das effektive Gewicht die Differenz zwischen der Masse des anhebbaren Öffnungselements (212) und der Masse der Menge an schwerer Phase ist, die durch das anhebbare Öffnungselement (212) verdrängt wird, wobei das effektive Gewicht wᵥ ausgewählt ist, um einen Wert des Ausdrucks wᵥ[kg]/(Aᵥ[m²]*Δρ[kg*m⁻³] in dem Bereich von 5 bis 90 % der Länge L_{d} (232) bereitzustellen, Δρ die Dichtedifferenz zwischen der leichten Phase (110) unterhalb des Ventilsiebbodens und der schweren Phase (120) oberhalb des Ventilsiebbodens (130) ist.

8. Flüssig-Flüssig-Gegenstrom-Extraktionskolonne nach Anspruch 7, wobei das effektive Gewicht wᵥ des anhebbaren Öffnungselements (212) derart ausgewählt ist, dass sich das anhebbare Öffnungselement (212) in einer offenen Position (300c) befindet, wenn die leichte Phase (110) unterhalb des Siebbodens 20 bis 90 %, bevorzugt 40 bis 85 %, der Länge L_{d} (232) des Fallrohrs (132) erreicht.

9. Flüssig-Flüssig-Gegenstrom-Extraktionskolonne nach Anspruch 7 oder 8, wobei das effektive Gewicht wᵥ derart ausgewählt ist, dass ein Wert des Ausdrucks wᵥ[kg]/(Aᵥ[m²]*Δρ[kg*m⁻³]) in dem Bereich von 5 bis 70 %, bevorzugt von 60 bis 80 %, besonders bevorzugt von 10 bis 50 % der Länge L_{d} (232) bereitgestellt wird.

10. Flüssig-Flüssig-Gegenstrom-Extraktionskolonne nach den Ansprüchen 7 bis 9, wobei die Länge L_{d} (232) des Fallrohrs (132) des mindestens einen Ventilsiebbodens (130) 100 bis 1400 mm, bevorzugt 200 bis 1200 mm, besonders bevorzugt 300 bis 1000 mm und am meisten bevorzugt 350 bis 850 mm ist.

11. Verwendung einer Flüssig-Flüssig-Gegenstrom-Extraktionskolonne (100) nach einem der Ansprüche 7 bis 10 zur Flüssig-Flüssig-Extraktion und/oder zum Erweitern des Betriebsbereichs, zum Verbessern der Betriebsstabilität und zum Erhöhen der Extraktionsleistung von Siebböden in Extraktionskolonnen, vorzugsweise für die Extraktion einer Wasserstoffperoxid enthaltenden oxidierten Arbeitslösung (102) eines Anthrachinon-Prozesses.

12. Anlage zum Herstellen einer konzentrierten Wasserstoffperoxid-Lösung durch einen Anthrachinon-Prozess, Folgendes umfassend:
(1) einen Hydrierungsreaktor zum Hydrieren der Arbeitslösung, um eine hydrierte Arbeitslösung bereitzustellen,
(2) ein Oxidationsmittel zum Oxidieren der hydrierten Arbeitslösung mit einem Sauerstoff enthaltenden Gas, um eine oxidierte Arbeitslösung bereitzustellen, die Wasserstoffperoxid umfasst,
(3) eine Flüssig-Flüssig-Gegenstrom-Extraktionskolonne nach einem der Ansprüche 7 bis 10 zum Extrahieren der oxidierten Arbeitslösung, die Wasserstoffperoxid umfasst, um wässriges Wasserstoffperoxid bereitzustellen, und
(4) eine Destillationseinheit zum Aufkonzentrieren des wässrigen Wasserstoffperoxids, um eine konzentrierte Wasserstoffperoxid-Lösung bereitzustellen.

## Revendications

1. Procédé d'extraction pour l'extraction d'une solution de travail oxydée contenant du peroxyde d'hydrogène (102) d'un procédé anthraquinone, comprenant la mise en contact de deux liquides non miscibles, le premier liquide (102) ayant une densité inférieure au second liquide (101), dans une colonne d'extraction à contre-courant (100) comprenant une pluralité de plateaux de tamis (130) comprenant chacun un conduit de descente (132), le second liquide (101) étant introduit au-dessus du plateau de tamis supérieur et le premier liquide (102) étant introduit dans la colonne d'extraction (100) au-dessous du plateau de tamis inférieur, le second liquide (101) fournissant une phase lourde (120) dans la colonne d'extraction à contre-courant (100) et le premier liquide (102) fournissant une phase légère (110) dans la colonne d'extraction à contre-courant (100), **caractérisé en ce qu'**au moins un desdits plateaux de tamis est un plateau de tamis à vanne (130) comprenant
(a) un conduit de descente (132) avec une longueur L_{d} (232) s'étendant vers le bas à partir du plateau de tamis à vanne (130), et
(b) au moins une vanne flottante (131) comprenant un élément d'ouverture soulevable (212) recouvrant un trou de vanne (211) dans le plateau de tamis à vanne (130) et pouvant être soulevée par la phase légère (110) sous le plateau de tamis (130), l'élément d'ouverture soulevable (212) ayant un poids effectif wᵥ, le poids effectif wᵥ étant défini comme la différence entre la masse de l'élément d'ouverture soulevable (212) et la masse de la quantité de phase lourde déplacée par l'élément d'ouverture soulevable (212), et le poids effectif wᵥ étant sélectionné de telle sorte que l'élément d'ouverture soulevable (212) est soulevé par la phase légère (110) sous le plateau de tamis avant que la phase légère (110) n'inonde le conduit de descente (132),
le trou de vanne (211) ayant une aire de trou Aᵥ (310), et le poids effectif wᵥ étant choisi pour fournir une valeur de l'expression wᵥ [kg]/(Aᵥ [m²]*Δρ[kg*m⁻³]) dans la plage de 5 à 90 % de la longueur L_{d} (232), Δρ étant la différence de densité entre la phase légère (110) sous le plateau de tamis à vanne et la phase lourde (120) au-dessus du plateau de tamis à vanne (130).

2. Procédé d'extraction selon la revendication 1, le poids effectif wᵥ étant choisi pour fournir une valeur de l'expression wᵥ[kg]/(Aᵥ[m²]*Δρ[kg*m⁻³]) dans la plage de 5 à 70 %, de préférence de 60 à 80 %, de manière plus préférée de 10 à 50 % de la longueur L_{d} (232) [m].

3. Procédé d'extraction selon la revendication 1, le poids effectif wᵥ de l'élément d'ouverture soulevable (212) étant sélectionné de telle sorte que l'élément d'ouverture soulevable (212) est dans une position ouverte (300c) si la phase légère (110) au-dessous du plateau de tamis atteint de 5 à 99 %, de préférence de 20 à 90 %, de manière plus préférée de 40 à 85 %, de manière la plus préférée de 70 à 95 %, de la longueur L_{d} (232) du conduit de descente (132).

4. Procédé d'extraction selon l'une quelconque des revendications précédentes, le poids de l'élément d'ouverture soulevable (212) étant de 0,002 kg à 0,1 kg, de préférence de 0,003 à 0,070 kg, de manière plus préférée de 0,005 à 0,050 kg, et de manière la plus préférée de 0,010 à 0,030 kg.

5. Procédé d'extraction selon l'une quelconque des revendications précédentes, la longueur L_{d} (232) du conduit de descente (132) de l'au moins un plateau de tamis à vanne (130) étant de 100 à 1400 mm, de préférence de 200 à 1200 mm, de manière plus préférée de 300 à 1000 mm, et de manière la plus préférée de 350 à 850 mm.

6. Procédé d'extraction selon l'une quelconque des revendications précédentes, le premier liquide (102) étant une solution de travail oxydée d'un procédé anthraquinone comprenant du peroxyde d'hydrogène dissous et le second liquide (101) étant un milieu aqueux, et une solution aqueuse de peroxyde d'hydrogène (103) étant soutirée au fond de la colonne d'extraction et une solution de travail extraite (103) étant soutirée au-dessus du point d'alimentation pour le milieu aqueux.

7. Colonne d'extraction liquide-liquide à contre-courant (100) pour l'extraction d'une solution de travail oxydée contenant du peroxyde d'hydrogène (102) d'un procédé anthraquinone, la colonne d'extraction (100) comprenant une pluralité de plateaux de tamis (130) ayant chacun des trous de tamis (213) et un conduit de descente (132), un second liquide (101) pouvant être introduit au-dessus du plateau de tamis supérieur et un premier liquide (102) pouvant être introduit dans la colonne d'extraction (100) au-dessous du plateau de tamis inférieur, le premier liquide (102) ayant une densité inférieure au second liquide (101), le second liquide (101) pouvant fournir une phase lourde (120) dans la colonne d'extraction (100) et le premier liquide (102) pouvant fournir une phase légère (110) dans la colonne d'extraction (100),
au moins un desdits plateaux de tamis étant un plateau de tamis à vanne (130) comprenant :
(i) un conduit de descente (132) d'une longueur Ld (232) s'étendant vers le bas à partir du plateau de tamis à vanne (130), et
(ii) au moins une vanne flottante (131) comprenant un élément d'ouverture soulevable (212) recouvrant un trou de vanne (211) dans le plateau de tamis à vanne (130) et pouvant être soulevée par la phase légère (110) sous le plateau de tamis (130), l'élément d'ouverture soulevable (212) ayant un poids effectif wᵥ, le poids effectif wᵥ étant sélectionné de telle sorte que l'élément d'ouverture soulevable (212) est soulevé par la phase légère (110) sous le plateau de tamis avant que la phase légère (110) n'inonde le conduit de descente (132) ; et
le trou de vanne (211) ayant une aire de trou Aᵥ (310), le poids effectif étant la différence entre la masse de l'élément d'ouverture soulevable (212) et la masse de la quantité de phase lourde déplacée par l'élément d'ouverture soulevable (212), le poids effectif wᵥ étant choisi pour fournir une valeur de l'expression wᵥ [kg]/(Aᵥ [m²]*Δρ[kg*m⁻³]) dans la plage de 5 à 90 % de la longueur L_{d} (232), Δρ étant la différence de densité entre la phase légère (110) sous le plateau de tamis à vanne et la phase lourde (120) au-dessus du plateau de tamis à vanne (130).

8. Colonne d'extraction liquide-liquide à contre-courant selon la revendication 7, le poids effectif wᵥ de l'élément d'ouverture soulevable (212) étant sélectionné de telle sorte que l'élément d'ouverture soulevable (212) est dans une position ouverte (300c) si la phase légère (110) au-dessous du plateau de tamis atteint de 20 à 90 %, de préférence de 40 à 85 % de la longueur L_{d} (232) du conduit de descente (132).

9. Colonne d'extraction liquide-liquide à contre-courant selon la revendication 7 ou 8, le poids effectif wᵥ étant choisi pour fournir une valeur de l'expression wᵥ[kg]/(Aᵥ[m²]*Δρ[kg*m⁻³]) dans la plage de 5 à 70 %, de préférence de 60 à 80 %, de manière plus préférée de 10 à 50 % de la longueur L_{d} (232).

10. Colonne d'extraction liquide-liquide à contre-courant selon l'une quelconque des revendications 7 à 9, la longueur L_{d} (232) du conduit de descente (132) de l'au moins un plateau de tamis à vanne (130) étant de 100 à 1400 mm, de préférence de 200 à 1200 mm, de manière plus préférée de 300 à 1000 mm, et de manière la plus préférée de 350 à 850 mm.

11. Utilisation d'une colonne d'extraction liquide-liquide à contre-courant (100) selon l'une quelconque des revendications 7 à 10 pour l'extraction liquide-liquide et/ou pour étendre la plage de fonctionnement, pour améliorer la stabilité de fonctionnement et pour augmenter les performances d'extraction de plateaux de tamis dans des colonnes d'extraction, de préférence pour l'extraction d'une solution de travail oxydée contenant du peroxyde d'hydrogène (102) d'un procédé anthraquinone.

12. Installation de production d'une solution concentrée de peroxyde d'hydrogène par un procédé anthraquinone comprenant :
(1) un hydrogénateur pour hydrogéner la solution de travail, pour fournir une solution de travail hydrogénée,
(2) un oxydeur permettant d'oxyder la solution de travail hydrogénée avec un gaz contenant de l'oxygène pour fournir une solution de travail oxydée comprenant du peroxyde d'hydrogène,
(3) une colonne d'extraction liquide-liquide à contre-courant selon l'une quelconque des revendications 7 à 10, pour extraire la solution de travail oxydée comprenant du peroxyde d'hydrogène pour fournir du peroxyde d'hydrogène aqueux, et
(4) une unité de distillation pour concentrer le peroxyde d'hydrogène aqueux pour fournir une solution de peroxyde d'hydrogène concentrée.
